# FASCICULE DE BREVET EUROPEEN

(11) **EP 2 893 141 B1**
(45) Date de publication et mention de la délivrance du brevet: **26.10.2016**
(21) Numéro de dépôt: 13766598.0
(22) Date de dépôt: 29.08.2013
(51) Int. Cl.: F01D 5/08, F01D 5/26, F01D 5/30

(54) **ROTOR DE TURBINE REFROIDI**
GEKÜHLTER TURBINENROTOR
COOLED TURBINE ROTOR

(30) Priorité: 03.09.2012 FR 1258190
(43) Date de publication de la demande: 15.07.2015
(73) Titulaire: SNECMA, 75015 Paris (FR)
(72) Inventeur: ROUSSELY-ROUSSEAU, Amaury, F-77550 Moissy Cramayel Cedex (FR); BURLET, Guy, F-77550 Moissy Cramayel Cedex (FR); MAREIX, Jean-Pierre, F-77550 Moissy Cramayel Cedex (FR)
(74) Mandataire: Robert, Mathias
(86) Numéro de dépôt international: PCT/FR2013/051995
(87) Numéro de publication internationale: WO 2014/033408

(56) Documents cités:
- EP-A1- 0 062 558
- EP-A1- 1 306 523
- EP-A1- 1 970 538
- EP-A1- 2 014 874
- EP-A2- 2 436 879
- GB-A- 2 409 240

## Description

La présente invention concerne un rotor de turbine pour une turbomachine, plus particulièrement un rotor de turbine basse pression.

Dans une turbomachine classique, le rotor de la turbine comporte des disques en périphérie desquels sont réalisés des alvéoles de montage de pieds d'aubes, chaque alvéole étant délimité par deux dents adjacentes du disque. Les pieds d'aubes comportent des portées qui, en fonctionnement, viennent en appui sur des portées des dents du disque sous l'effet de la force centrifuge.

Les disques sont centrés sur l'axe de la turbomachine et sont reliés entre eux et à un arbre de turbine par des brides.

Un disque amont peut comprendre une bride annulaire aval de fixation par des moyens du type vis-écrou à une bride annulaire amont d'un disque aval. Un flasque annulaire est monté entre les disques amont et aval et entoure au moins la bride amont du disque aval, pour retenir axialement les aubes sur le disque aval en prenant appui sur leurs pieds par sa partie d'extrémité aval. Ce flasque porte en outre des léchettes destinées à coopérer avec des blocs de matériau abradable montés sur des aubes fixes d'un distributeur situé axialement entre les disques amont et aval précités. Les léchettes et les blocs abradables forment des moyens d'étanchéité du type joint à labyrinthe.

Dans le cas où les disques amont et aval sont fixés entre eux par leurs brides, le flasque comporte une bride annulaire intercalée axialement entre les brides des disques.

Un espace annulaire est délimité entre le flasque et la bride amont du disque aval et est, en amont, alimenté en air de refroidissement qui est guidé jusqu'aux alvéoles du disque aval pour les ventiler.

Plus particulièrement, l'air de refroidissement atteint une cavité située dans le fond de l'alvéole, entre le pied d'aube et le disque.

Des études menées par la Demanderesse ont révélé l'apparition de fortes températures au niveau du sommet des dents du disque. Or, des températures importantes dans ces zones soumises à de fortes contraintes peuvent générer du fluage. En effet, en fonctionnement et sous l'effet de la force centrifuge, les pieds d'aubes exercent des contraintes de cisaillement importantes, en particulier dans les zones des portées.

Un tel fluage réduit considérablement la durée de vie du disque de turbine et peut impacter les performances de la turbomachine.

Afin d'éviter un tel phénomène, on prévoit généralement un débit de refroidissement important dans le fond des alvéoles, de manière à refroidir suffisamment les dents du disque. Ce débit de refroidissement étant toutefois prélevé sur l'air issu du compresseur, ceci affecte les performances de la turbomachine. Un rotor de turbine refroidi au niveau du sommet des dents du disque est connu du document EP 2 436 879.

L'invention a notamment pour but d'apporter une solution simple, efficace et économique à ces problèmes.

A cet effet, elle propose un rotor de turbine pour une turbomachine, comportant un disque comportant des alvéoles de montage de pieds d'aubes, chaque alvéole étant délimité par deux dents adjacentes du disque, les pieds d'aubes comportant des portées venant en appui sur des portées des dents du disque, caractérisé en ce que des clinquants sont montés sur les dents du disque, chaque clinquant ayant une forme générale en U comportant des parties latérales d'appui intercalées entre les portées correspondantes des pieds d'aubes et des dents du disque, et une partie médiane située en regard du sommet de la dent correspondante du disque et délimitant une cavité entre ledit sommet et le clinquant, le rotor de turbine comportant des moyens d'amenée d'air de refroidissement dans ladite cavité.

De cette manière, l'air de refroidissement est amené, non pas dans les zones de fond des alvéoles, mais au niveau des sommets des dents du disque. Un débit d'air plus faible et mieux contrôlé permet alors de refroidir efficacement les zones susceptibles de subir les effets d'un fluage. Ceci permet d'augmenter les performances du moteur, puisque le débit prélevé d'air de refroidissement est plus faible que dans l'art antérieur. L'invention augmente également significativement la durée de vie du disque, qui ne risque plus d'être soumis à des phénomènes de fluage.

Selon une forme de réalisation de l'invention, la partie médiane au moins de chaque clinquant comporte au moins un orifice de passage d'air de refroidissement, les moyens d'amenée d'air de refroidissement étant conçus pour amener l'air de refroidissement radialement à l'extérieur du clinquant de façon à ce que cet air traverse ledit orifice du clinquant, avant de pénétrer dans la cavité située entre la dent correspondante et le clinquant et impacter le sommet de la dent.

Le refroidissement par impact est relativement efficace et nécessite un débit d'air de refroidissement relativement faible.

De préférence, les aubes comportent chacune une plate-forme portant une pale et reliée par une échasse au pied d'aube, les échasses définissant entre elles des espaces de logement d'amortisseurs destinés à frotter sur des faces radialement internes des plates-formes des aubes pour dissiper leurs vibrations, les amortisseurs formant des cavités ouvertes vers l'amont et ouvertes radialement vers l'intérieur, en regard de l'orifice de passage d'air du clinquant, l'air de refroidissement étant amené par l'amont dans les cavités formées par les amortisseurs puis dans les cavités formées entre les clinquants et les dents du disque, au travers des orifices des clinquants.

Selon une variante de réalisation de l'invention, le disque comporte une bride amont entourée par un flasque annulaire délimitant avec la bride un espace annulaire de circulation d'air de refroidissement, le flasque annulaire comportant une partie aval venant en appui contre une face amont du disque et formant une butée de maintien des pieds d'aubes, ladite partie aval comportant des canaux d'amenée d'air de refroidissement reliant l'espace annulaire défini entre la bride amont et le flasque annulaire et les cavités formées par les amortisseurs.

Dans ce cas, le flasque amont peut fermer, à l'amont, les cavités formées par les amortisseurs, seuls les canaux d'amenée d'air de la partie aval du flasque débouchant à l'amont des cavités formées par les amortisseurs.

Selon une caractéristique de l'invention, le rotor de turbine comporte un flasque aval plaqué contre une face aval du disque de façon à fermer, à l'aval, les cavités situées entre les dents du disque et les clinquants, ledit flasque aval comportant des orifices calibrés d'évacuation de l'air hors desdites cavités.

Les orifices calibrés permettent de mieux contrôler le débit d'air de refroidissement.

Selon une autre forme de réalisation de l'invention, le disque comporte une bride amont entourée par un flasque annulaire amont délimitant avec la bride un espace annulaire de circulation d'air de refroidissement, le flasque annulaire comportant une partie aval venant en appui contre une face amont du disque et formant une butée de maintien des pieds d'aubes, ladite partie aval comportant des canaux d'amenée d'air de refroidissement reliant l'espace annulaire défini entre la bride amont et le flasque annulaire et les cavités formées entre les clinquants et les dents du disque.

Dans cette forme de réalisation, l'air ne traverse pas radialement des orifices des clinquants mais entre directement dans les cavités situées entre les clinquants et les dents du disque correspondantes, par l'intermédiaire des canaux formés dans le flasque annulaire.

Dans ce cas, le disque peut également comporter des canaux d'amenée d'air de refroidissement reliant les canaux de la partie aval du flasque et les cavités formées entre les clinquants et les dents du disque.

De préférence, les canaux d'amenée d'air de refroidissement du flasque et/ou du disque sont calibrés de façon à contrôler le débit d'air de refroidissement.

L'invention concerne également une turbomachine, telle qu'un turboréacteur ou un turbopropulseur d'avion, caractérisée en ce qu'elle comporte un rotor de turbine du type précité.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une demi-vue, en coupe longitudinale, d'un rotor de turbine de l'art antérieur,
- la figure 2 est une vue en coupe, selon un plan radial, d'une partie du rotor de turbine de l'art antérieur,
- la figure 3 est une vue en coupe, selon un plan radial, d'une partie d'un rotor de turbine selon une première forme de l'invention,
- la figure 4 est une vue en coupe longitudinale d'une partie du rotor de turbine de la figure 3,
- la figure 5 est une vue correspondant à la figure 4, d'une seconde forme de réalisation de l'invention,
- la figure 6 est une vue correspondant à la figure 4, d'une troisième forme de réalisation de l'invention,
- la figure 7 est une vue en perspective, d'une partie du rotor de la figure 6,
- la figure 8 est une vue en perspective, d'une partie d'un flasque annulaire appartenant au rotor des figures 6 et 7,
- la figure 9 est une vue correspondant à la figure 4, d'une quatrième forme de réalisation de l'invention.

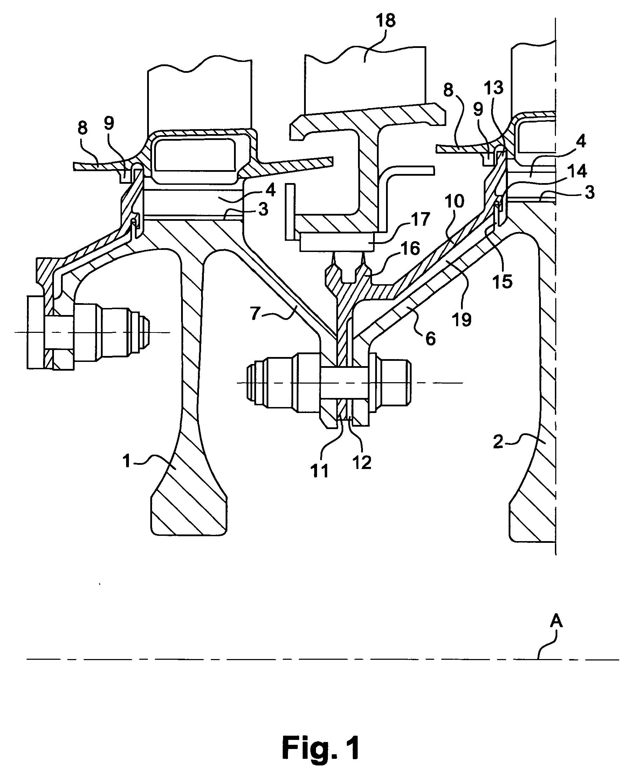

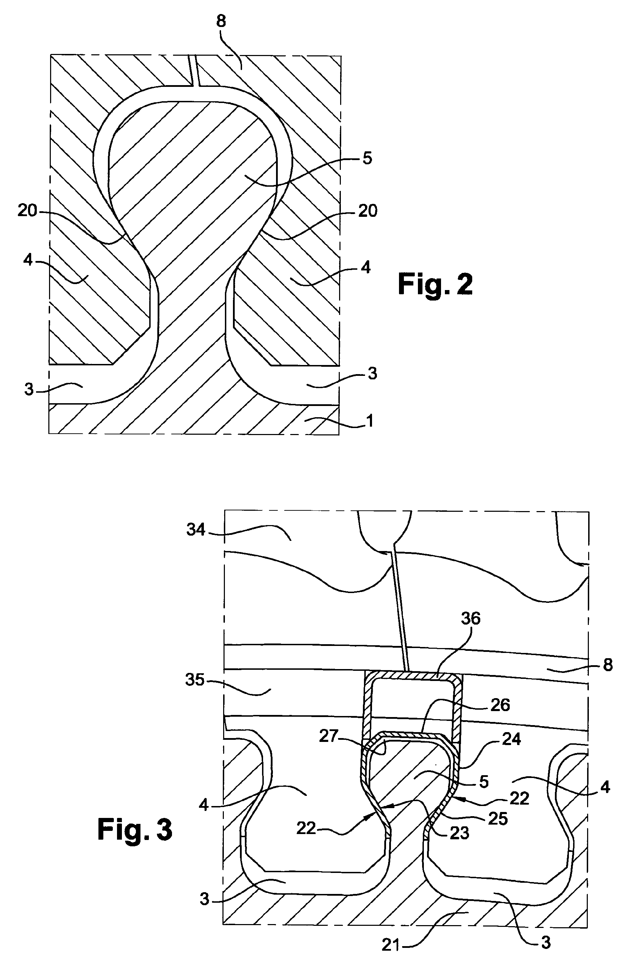

On se réfère d'abord aux figures 1 et 2 qui représentent un rotor de turbine basse-pression de l'art antérieur, ce rotor comportant plusieurs disques 1, 2, à la périphérie desquels sont réalisés des alvéoles 3 de montage de pieds d'aubes 4. Chaque alvéole est délimité par deux dents adjacentes 5. Les disques 1, 2 sont centrés sur l'axe A de la turbomachine et sont reliés entre eux et à un arbre de turbine par des brides annulaires 6, 7. Les pieds d'aubes 4 sont surmontés de plates-formes 8 adjacentes les unes aux autres de façon à délimiter la paroi interne d'une veine de circulation de gaz. Des dents 9 font saillie des plates-formes 8, radialement vers l'intérieur.

Seulement deux disques, respectivement amont 1 et aval 2, sont représentés en figure 1. Le disque amont 1 comprend une bride annulaire aval 7 de fixation à une bride annulaire amont 6 du disque aval 2. La fixation est réalisée par boulonnage.

Un flasque annulaire 10 de maintien des pieds d'aubes 4 est monté autour de la bride 6 et s'étend axialement entre les disques 1, 2 jusqu'aux alvéoles 3 du disque aval 2, de façon à former des butées axiales pour les pieds d'aubes 4 de ce disque 2.

Le flasque 10 comporte une bride annulaire interne 11 à son extrémité amont qui est intercalée axialement entre les brides 6, 7, et fixée à celles-ci par boulonnage. La bride 11 comporte des orifices radiaux 12 de passage d'air de refroidissement.

La périphérie radialement externe du flasque comporte des dents 13 coopérant avec les dents 9 des plates-formes 8 de manière à assurer le maintien en position du flasque 10. Des dents d'accrochage supplémentaires 14, 15 sont en outre prévues, respectivement sur le flasque 10 et sur le disque 2.

Le flasque 10 porte également des léchettes 16 destinées à coopérer avec des blocs 17 de matériau abradable montés sur des aubes fixes 18 d'un distributeur situé axialement entre les disques 1, 2. Les léchettes 16 et les blocs abradables 17 forment des moyens d'étanchéité du type joint à labyrinthe.

Le flasque 10 délimite avec la bride 6 un espace annulaire 19 de circulation d'air de ventilation. La face aval du flasque 10 vient en appui contre la face amont du disque 2 de manière à réaliser l'étanchéité de l'espace annulaire 19.

En fonctionnement, de l'air de ventilation pénètre à travers les orifices 12 de la bride 11 dans l'espace annulaire 19 formé entre le flasque 10 et la bride 6 et est guidé par le flasque 10 jusqu'aux cavités situées dans le fond des alvéoles 3 du disque aval 2, sous les pieds d'aubes 4.

Comme indiqué précédemment, le refroidissement de ces cavités ne permet pas de refroidir efficacement les zones des dents 5 et des pieds d'aube 4 soumises à de fortes contraintes de cisaillement, et qui sont situées au niveau des portées 20. Il existe donc un risque de fluage dans ces zones, pouvant engendrer une dégradation du disque 2. Afin d'éviter cela, il est nécessaire de prévoir un débit d'air de refroidissement important dans le fond des alvéoles .3, ce qui affecte les performances de la turbomachine.

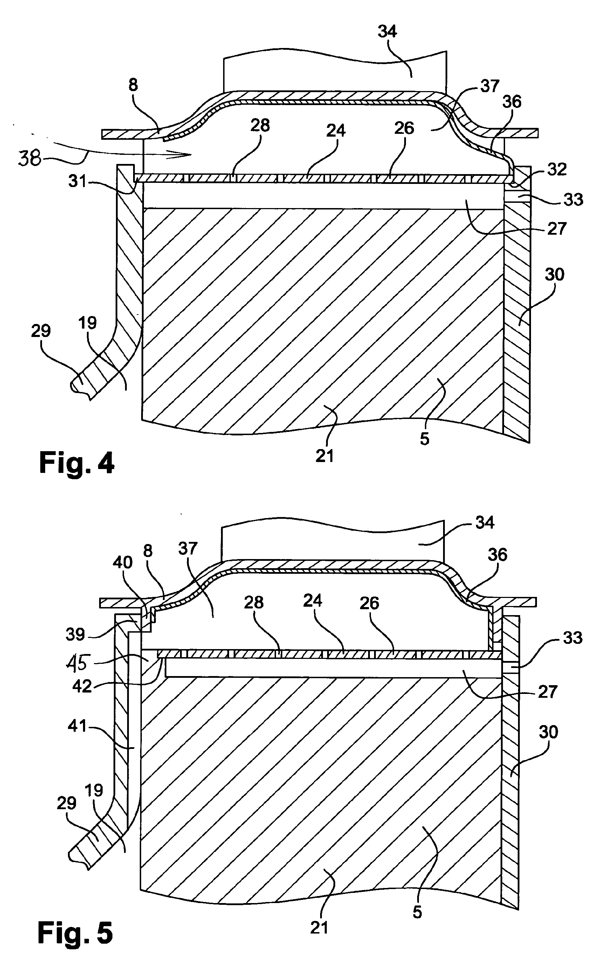

Les figures 3 et 4 illustrent un rotor de turbine basse-pression selon une première forme de réalisation de l'invention, comprenant un disque 21 comportant des alvéoles 3 servant au montage de pieds d'aubes 4, chaque alvéole 3 étant délimité par deux dents adjacentes 5 du disque 21, les pieds d'aubes 4 comportant des portées 22 venant en appui sur des portées 23 des dents 5 du disque 21.

Des clinquants 24 sont montés sur les dents 5 du disque 21, chaque clinquant 24 ayant une forme générale de U inversé comportant des parties latérales 25 d'appui intercalées entre les portées correspondantes 22, 23 des pieds d'aubes 4 et des dents 5 du disque 21, et une partie médiane 26 située en regard du sommet de la dent 5 correspondante du disque 21 et délimitant une cavité 27 entre ledit sommet et le clinquant 24. La partie médiane 26 de chaque clinquant 24 comporte des orifices radiaux 28.

Comme dans l'art antérieur, le disque 21 comporte une bride amont entourée par un flasque 29 délimitant avec la bride un espace annulaire 19 de circulation d'air de refroidissement et servant au maintien des pieds 4 des aubes, dans la direction amont. Le rotor comporte en outre un flasque aval 30 plaqué contre une face aval du disque 21 et servant au maintien des pieds 4 des aubes, dans la direction aval.

Le bord amont de la partie médiane 26 de chaque clinquant 24 est engagé dans un épaulement 31 de la périphérie externe du flasque amont 29 et le bord aval de la partie médiane 26 de chaque clinquant 24 est engagé dans un épaulement 32 de la périphérie externe du flasque aval 30. La cavité 27 est ainsi fermée à l'amont et à l'aval, respectivement par le flasque amont 29 et par le flasque aval 30.

Le flasque aval 30 comporte en outre des orifices calibrés 33 d'évacuation de l'air hors desdites cavités 27.

Les aubes comportent chacune une plate-forme 8 portant une pale 34 et reliée par une échasse 35 au pied d'aube 4, les échasses 35 définissant entre elles des espaces de logement d'amortisseurs 36 destinés à frotter sur des faces radialement internes des plates-formes 8 des aubes pour dissiper leurs vibrations. De tels amortisseurs 36 sont par exemple connus du document FR 2 963 382, au nom de la Demanderesse.

Les amortisseurs 36 forment des cavités ouvertes vers l'amont et ouvertes radialement vers l'intérieur, en regard des orifices 28.

En fonctionnement, de l'air issu du compresseur circule de l'amont vers l'aval, à une pression supérieure au flux de gaz circulant à l'intérieur de la veine délimitée intérieurement par les plates-formes 8 des aubes.

L'air issu du compresseur pénètre alors, par l'amont, dans les cavités 37 formées par les amortisseurs 36 (flèche 38), puis dans les cavités 27 formées entre les clinquants 24 et les dents 5 du disque 21, au travers des orifices 28 des clinquants 24.

Cet air impacte directement les sommets des dents 5 du disque 21, de manière à les refroidir. L'air contenu dans les cavités 27 s'échappe ensuite vers l'aval, au travers des orifices 33 du flasque aval 30.

La figure 5 illustre une deuxième forme de réalisation de l'invention, dans laquelle la périphérie externe 39 de la partie aval du flasque amont 29 est prolongée radialement à l'extérieur jusqu'à prendre appui de façon étanche sur des rebords 40 s'étendant radialement vers l'intérieur depuis les plates-formes 8.

La partie aval du flasque amont comporte en outre des canaux 41 s'étendant radialement depuis l'espace annulaire 19 et débouchant à l'amont des cavités 37.

Dans cette forme de réalisation, le bord amont de la partie médiane 26 du clinquant 24 repose sur un épaulement 42 ménagé dans une partie en saillie 45 du disque 21. Plus particulièrement, la partie en saillie 45 s'étend radialement vers l'extérieur depuis le sommet de la dent 5 du disque 21.

De cette manière, en fonctionnement, l'air de refroidissement issu de l'espace annulaire 19 pénètre dans les cavités 37, par l'intermédiaire des canaux 41, puis dans les cavités 27, par l'intermédiaire des orifices 28, de façon à refroidir les sommets des dents 5 du disque 21. L'air est ensuite évacué à l'aval par les orifices 33.

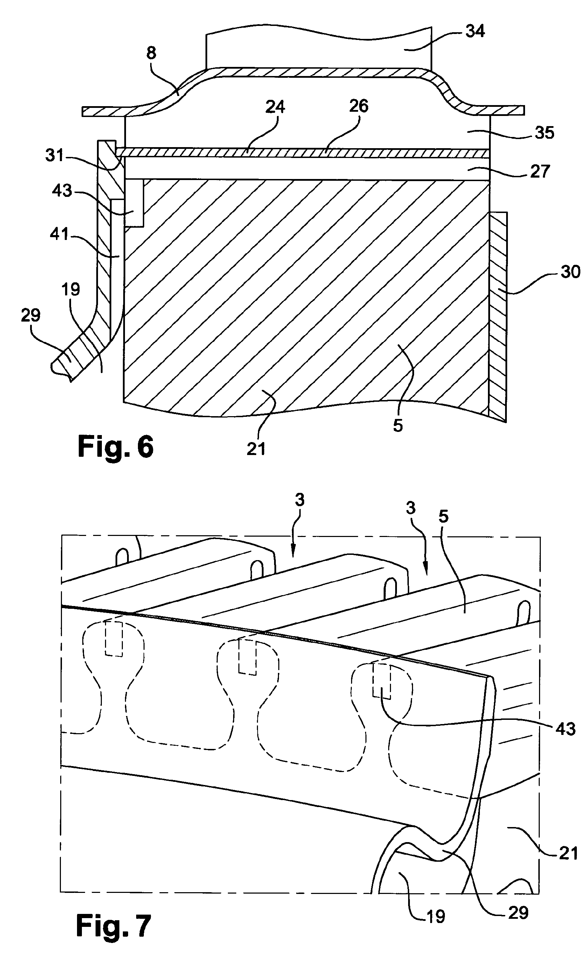

Les figures 6 à 8 illustrent une troisième forme de réalisation de l'invention, dans laquelle chaque cavité 27 débouche radialement à l'aval, le flasque aval 30 ne venant plus refermer la cavité.

Le flasque amont 29 comporte également des canaux radiales 41 débouchant d'une part dans l'espace annulaire 19 et d'autre part en regard de rainures 43 ménagées dans les dents 5 du disque 21. Ces dernières débouchent à leur tour en partie amont des cavités 27.

Les canaux 41 du flasque 29 et/ou les rainures 43 du disque 21 sont calibrées de manière à contrôler le débit d'air de refroidissement.

Bien entendu, les canaux 41 pourraient déboucher directement dans les cavités 27. Dans ce cas, les dents 5 ne comportent pas de rainure 43.

En fonctionnement l'air issu de l'espace annulaire 19 traverse les canaux 41 et les rainures 43 et pénètre dans les cavités 27 où il refroidit le sommet des dents 5 du disque 21, avant de s'échapper par les extrémités aval ouvertes des cavités 27.

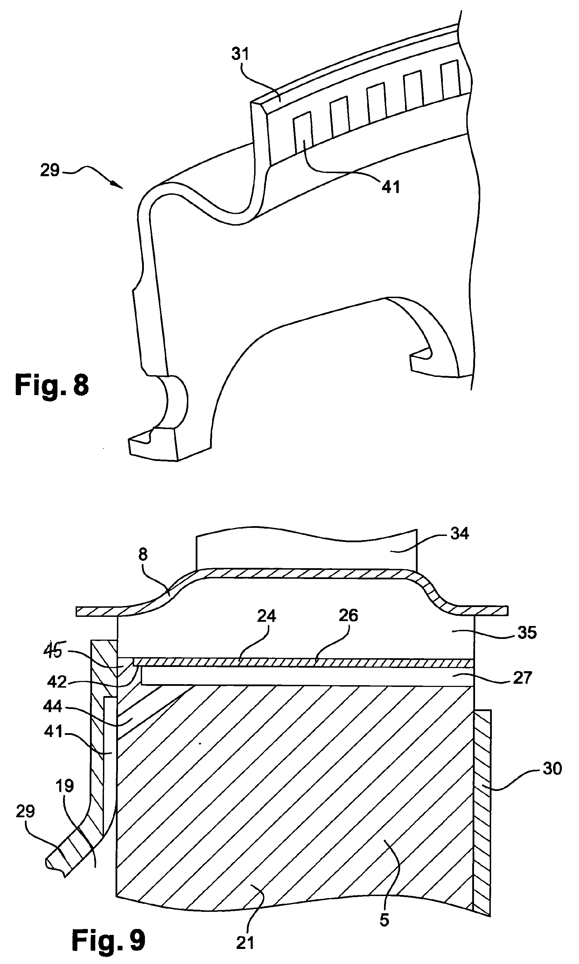

La figure 9 illustre une quatrième forme de réalisation de l'invention, qui diffère de celle des figures 6 à 8 en ce que les rainures 43 du disque 21 ont été remplacées par des trous 44 capables d'amener l'air de refroidissement issu des canaux 41 du flasque 29 jusque dans les cavités 27. Les trous 44 sont orientés de façon oblique par rapport au plan radial et par rapport à l'axe A de la turbomachine.

Toutes les variantes de l'invention permettent d'amener de l'air de refroidissement directement en contact avec les sommets des dents 5 du disque 21 de façon à mieux contrôler la température de ces zones soumises à des contraintes de cisaillement importantes. On évite ainsi tout phénomène de fluage et toute dégradation prématurée du disque 21. Ces formes de réalisation permettent également de limiter et de contrôler efficacement le débit d'air de refroidissement, afin de ne pas pénaliser les performances de la turbomachine.

## Revendications

1. Rotor de turbine pour une turbomachine, comprenant un disque (21) comportant des alvéoles (3) servant au montage de pieds d'aubes (4), chaque alvéole (3) étant délimité par deux dents (5) adjacentes du disque (21), les pieds d'aubes (4) comportant des portées (22) venant en appui sur des portées (23) des dents (5) du disque (21), dans lequel des clinquants (24) sont montés sur les dents (5) du disque (21), chaque clinquant (24) ayant une forme générale en U comportant des parties latérales d'appui (25) intercalées entre les portées correspondantes (22, 23) des pieds d'aubes (4) et des dents (5) du disque (21), et une partie médiane (26) située en regard du sommet de la dent correspondante (5) du disque (21) et délimitant une cavité (27) entre ledit sommet et le clinquant (24), le rotor de turbine comportant des moyens d'amenée d'air de refroidissement dans ladite cavité (27).

2. Rotor de turbine selon la revendication 1, **caractérisé en ce que** la partie médiane (26) au moins de chaque clinquant (24) comporte au moins un orifice (28) de passage d'air de refroidissement, les moyens d'amenée d'air de refroidissement étant conçus pour amener l'air de refroidissement (38) radialement à l'extérieur du clinquant (24) de façon à ce que cet air traverse ledit orifice (28) du clinquant (24), avant de pénétrer dans la cavité (27) située entre la dent correspondante (5) et le clinquant (24) et impacter le sommet de la dent (5).

3. Rotor de turbine selon la revendication 2, **caractérisé en ce que** les aubes comportent chacune une plate-forme (8) portant une pale (34) et reliée par une échasse (35) au pied d'aube (4), les échasses (35) définissant entre elles des espaces de logement d'amortisseurs (36) destinés à frotter sur des faces radialement internes des plates-formes (8) des aubes pour dissiper leurs vibrations, les amortisseurs (36) formant des cavités (37) ouvertes vers l'amont et ouvertes radialement vers l'intérieur, en regard de l'orifice (28) de passage d'air du clinquant (24), l'air de refroidissement étant amené par l'amont dans les cavités (37) formées par les amortisseurs (36) puis dans les cavités (27) formées entre les clinquants (24) et les dents (5) du disque (21), au travers des orifices (28) des clinquants (24).

4. Rotor de turbine selon la revendication 3, caractérisé en ce le disque (21) comporte une bride amont entourée par un flasque annulaire (29) délimitant avec la bride un espace annulaire (19) de circulation d'air de refroidissement, le flasque annulaire (29) comportant une partie aval venant en appui contre une face amont du disque (21) et formant une butée de maintien des pieds d'aubes (4), ladite partie aval comportant des canaux (41) d'amenée d'air de refroidissement reliant l'espace annulaire (19) défini entre la bride amont et le flasque annulaire (29) et les cavités (37) formées par les amortisseurs (36).

5. Rotor de turbine selon la revendication 4, **caractérisé en ce que** le flasque amont ferme, à l'amont, les cavités (37) formées par les amortisseurs (36), seuls les canaux (41) d'amenée d'air de la partie aval du flasque (29) débouchant à l'amont des cavités (37) formées par les amortisseurs (36).

6. Rotor de turbine selon l'une des revendications 1 à 5, **caractérisée en ce qu'**il comporte un flasque aval (30) plaqué contre une face aval du disque (21) de façon à fermer, à l'aval, les cavités (27) situées entre les dents (5) du disque (21) et les clinquants (24), ledit flasque aval (30) comportant des orifices calibrés (33) d'évacuation de l'air hors desdites cavités (27).

7. Rotor de turbine selon la revendication 1, **caractérisé en ce que** le disque (21) comporte une bride amont entourée par un flasque annulaire amont (29) délimitant avec la bride un espace annulaire (19) de circulation d'air de refroidissement, le flasque annulaire (29) comportant une partie aval venant en appui contre une face amont du disque (21) et formant une butée de maintien des pieds d'aubes (4), ladite partie aval comportant des canaux (41) d'amenée d'air de refroidissement reliant l'espace annulaire (19) défini entre la bride amont et le flasque annulaire (29) et les cavités (27) formées entre les clinquants (24) et les dents (5) du disque (21).

8. Rotor de turbine selon la revendication 7, **caractérisé en ce que** le disque (21) comporte des rainures (43) d'amenée d'air de refroidissement reliant les canaux (41) de la partie aval du flasque (29) et les cavités (27) formées entre les clinquants (24) et les dents (5) du disque (21).

9. Rotor de turbine selon la revendication 7 ou 8, **caractérisé en ce que** les canaux (41) d'amenée d'air de refroidissement du flasque (29) et/ou les rainures (43) d'amenée d'air de refroidissement du disque (21) sont calibrés de façon à contrôler le débit d'air de refroidissement.

10. Turbomachine, telle qu'un turboréacteur ou un turbopropulseur d'avion, **caractérisée en ce qu'**elle comporte un rotor de turbine selon l'une des revendications 1 à 9.

## Patentansprüche

1. Turbinenrotor einer Turbomaschine, welcher eine Scheibe (21) mit Hohlräumen (3) zur Montage von Schaufelfüßen (4) umfasst, wobei jeder Hohlraum (3) durch zwei neben der Scheibe (21) befindliche Zähne (5) begrenzt wird, und die Schaufelfüße (4) Ausladungen (22) aufweisen, die auf den Ausladungen (23) der Zähne (5) der Scheibe (21) aufliegen, in welchen Metallfolien (24) auf die Zähne (5) von Scheibe (21) montiert sind, wobei die Metallfolie (24) im Wesentlichen u-förmig ist und seitliche Auflageelemente umfasst (25), welche zwischen den entsprechenden Ausladungen (22, 23) der Schaufelfüße (4) und der Zähne (5) der Scheibe (21) eingefügt sind, und einen mittleren Teil (26) gegenüber der Kopfkante des entsprechenden Zahns (5) der Scheibe (21), welcher einen Hohlraum (27) zwischen besagter Kopfkante und der Metallfolie (24) begrenzt, wobei der Turbinenrotor Mittel zum Zuführen von Kühlluft in besagten Hohlraum (27) aufweist.

2. Turbinenrotor nach Anspruch 1, **dadurch gekennzeichnet, dass** zumindest der mittlere Teil (26) jeder Metallfolie (24) mindestens eine Durchgangsöffnung (28) für Kühlluft enthält, wobei die Mittel für die Zuführung der Kühlluft so gestaltet sind, dass die Kühlluft (38) radial außen an der Metallfolie (24) zugeführt wird und die Luft durch besagte Öffnung (28) der Metallfolie (24) strömt, bevor sie in den Hohlraum (27) zwischen den entsprechenden Zahn (5) und die Metallfolie (24) gelangt und auf die Kopfkante des Zahns (5) einwirkt.

3. Turbinenrotor nach Anspruch 2, **dadurch gekennzeichnet, dass** die Schaufeln jeweils eine Plattform (8) mit einem Blatt (34) umfassen, das mittels einer Stütze (35) mit dem Schaufelfuß (4) verbunden ist, wobei die Stützen (35) gegeneinander Bereiche zur Aufnahme von Dämpfern (36) begrenzen, die dazu bestimmt sind, an den radial inneren Seiten der Plattformen (8) der Schaufeln zu reiben, um deren Vibrationen abzuleiten, wobei die Dämpfer (36) gegenüber der Luftdurchgangsöffnung (28) der Metallfolie (24) offene Hohlräume (37) stromaufwärts bilden, welche sich radial nach innen öffnen, und die Kühlluft stromaufwärts erst den durch die Dämpfer (36) gebildeten Hohlräumen (37) und dann durch die Öffnungen (28) der Metallfolien (24) den Hohlräumen (27) zwischen den Metallfolien (24) und den Zähnen (5) der Scheibe (21) zugeführt wird.

4. Turbinenrotor nach Anspruch 3, **dadurch gekennzeichnet, dass** die Scheibe (21) einen stromaufwärtigen Flansch umfasst, der von einem Ringflansch (29) umgeben ist, welcher mit dem Flansch einen Ringraum (19) zum Zirkulieren der Kühlluft abgrenzt, wobei der Ringflansch (29) einen stromabwärtigen Teil enthält, der an einer stromaufwärts gerichteten Seite der Scheibe (21) aufliegt und einen Anschlag zum Halten der Schaufelfüße (4) bildet, wobei besagter stromabwärtiger Teil Luftführungskanäle (41) umfasst, die den Ringraum (19) zwischen dem stromaufwärtigen Flansch und dem Ringflansch (29) und die von den Dämpfern (36) gebildeten Hohlräume (37) miteinander verbindet.

5. Turbinenrotor nach Anspruch 4, **dadurch gekennzeichnet, dass** der stromaufwärtige Ringflansch stromaufwärts die durch die Dämpfer (36) gebildeten Hohlräume (37) schließt, wobei nur die Luftführungskanäle (41) des stromaufwärtigen Teils des Ringflanschs (29) oberhalb der durch die Dämpfer (36) gebildeten Hohlräume (37) einmünden.

6. Turbinenrotor nach einem der Ansprüche 1 bis 5, **dadurch gekennzeichnet, dass** er einen stromabwärtigen Flansch (30) umfasst, der gegen eine stromabwärts gerichtete Seite der Scheibe (21) gedrückt wird, so dass sich die Hohlräume (27) zwischen den Zähnen (5) der Scheibe (21) und den Metallfolien (24) schließen, wobei besagter stromabwärtiger Flansch (30) kalibrierte Luftablassöffnungen (33) außerhalb der besagten Hohlräume (27) enthält.

7. Turbinenrotor nach Anspruch 1, **dadurch gekennzeichnet, dass** die Scheibe (21) einen stromaufwärtigen Flansch umfasst, der von einem stromaufwärtigen Ringflansch (29) umgeben ist und mit dem Flansch einen Ringraum (19) für das Zirkulieren von Kühlluft abgrenzt, wobei der Ringflansch (29) einen stromabwärtigen Teil umfasst, welcher auf der stromaufwärtig gerichteten Seite der Scheibe (21) aufliegt und einen Anschlag zum Halten der Schaufelfüße (4) bildet, wobei besagter stromabwärtiger Teil Luftführungskanäle (41) für die Kühlluft umfasst, welche den Ringraum (19) zwischen stromaufwärtigem Flansch und Ringflansch (29) und die zwischen den Metallfolien (24) und den Zähnen (5) von Scheibe (21) gebildeten Hohlräumen (27) miteinander verbinden.

8. Turbinenrotor nach Anspruch 7, **dadurch gekennzeichnet, dass** die Scheibe (21) Rillen (43) zur Kühlluftzuführung enthält, welche die Kanäle (41) des stromabwärtigen Teils des Flansches (29) und die Hohlräume (27), die durch die Metallfolien (24) und die Zähne (5) der Scheibe (21) gebildet werden, miteinander verbinden.

9. Turbinenrotor nach Anspruch 7 oder 8, **dadurch gekennzeichnet, dass** die Kanäle des Flansches (29) zum Zuführen (41) von Kühlluft und/oder die Rillen (43) der Scheibe (21) zum Zuführen von Kühlluft so kalibriert sind, dass der Kühlluftstrom gesteuert wird.

10. Turbomaschine wie zum Beispiel ein Turbostrahltriebwerk oder ein Turbopropellertriebwerk, **dadurch gekennzeichnet**, das es einen Turbinenantrieb gemäß einem der Ansprüche 1 bis 9 enthält.

## Claims

1. A turbine rotor for a turbomachine, comprising a disk (21) containing slots (3) for mounting vane roots (4), with each slot (3) being defined by two adjacent teeth (5) of the disk (21), with the vane roots (4) comprising contact surfaces (22) bearing on contact surfaces (23) of the teeth (5) of the disk (21), in which foils (24) are mounted on the teeth (5) of the disk (21), with each foil (24) having a general U-shape comprising lateral bearing parts (25) inserted between the corresponding contact surfaces (22, 23) of the vane roots (4) and the teeth (5) of the disk (21), and a central part (26) facing the peak of the corresponding tooth (5) of the disk (21) and defining a cavity (27) between said peak and the foil (24), with the turbine rotor comprising means for supplying cooling air into said cavity (27).

2. A turbine rotor according to claim 1, **characterized in that** the central part (26) of at least of each foil (24) comprises at least one orifice (28) for letting the cooling air through, with the means for supplying cooling air being adapted to supply cooling air (37) radially outside the foil (24) so that air goes through said orifice (28) of the foil (24), before entering the cavity (27) located between the corresponding tooth (5) and the foil (24) and impacting the peak of the tooth (5).

3. A turbine rotor according to claim 2, **characterized in that** the vanes each comprise a platform (8) carrying a blade (34) and connected via a tang (35) to the vane root (4), with the tangs (35) defining therebetween spaces for accommodating dampers (36) intended to rub on radially inner faces of the platforms (8) of the vanes to dissipate the vibration thereof, with the dampers (36) forming cavities (37) open in the upstream direction and open radially inwards, opposite the orifice (28) letting the air through the foil (24), with cooling air being supplied from upstream into the cavities (37) formed by the dampers (36) and into the cavities (27) formed between the foils (24) and the teeth (5) of the disk (21), through the orifices (28) of the foils (24).

4. A turbine rotor according to claim 3, **characterized in that** the disk (21) comprises an upstream flange surrounded by an annular shroud (29) which defines, with the flange, an annular space (19) for the circulation of cooling air, with the annular shroud (29) having a downstream portion bearing on an upstream face of the disk (21) and forming a stop for holding the vane roots (4), with said downstream portion comprising channels (41) supplying cooling air connecting the annular space (19) defined between the upstream flange and the annular shroud (29) and the cavities (37) formed by the dampers (36).

5. A turbine rotor according to claim 4, **characterized in that** the upstream shroud closes, upstream, the cavities (37) formed by the dampers (36), with the air supplying channels (41) of the downstream portion of the flange (29) only opening upstream of the cavities (37) formed by the dampers (36).

6. A turbine rotor according to one of claims 1 to 5, **characterized in that** it comprises a downstream shroud (30) pressed against a downstream face of the disk (21) so as to close, downstream, the cavities (27) located between the teeth (5) of the disk (21) and the foils (24), with said downstream shroud (30) having calibrated orifices (33) for discharging air out of said cavities (27).

7. A turbine rotor according to claim 1, **characterized in that** the disk (21) has an upstream flange surrounded by an upstream annular shroud (29) which defines, with the flange, an annular space (19) for circulating cooling air, with the annular shroud (29) having a downstream portion resting on an upstream face of the disk (21) and forming a stop holding the vane roots (4), with said downstream portion comprising cooling air supplying channels (41) connecting the annular space (19) defined between the upstream flange and the annular shroud (29) and the cavities (27) formed between the foils (24) and the teeth (5) of the disk (21).

8. A turbine rotor according to claim 7, **characterized in that** the disk (21) comprises cooling air supplying grooves (43) connecting the channels (41) of the downstream part of the shroud (29) and the cavities (27) formed between the foils (24) and the teeth (5) of the disk (21).

9. A turbine rotor according to claim 7 or 8, **characterized in that** the channels (41) supplying cooling air to the shroud (29) and/or the cooling air supplying grooves (43) of the disk (21) are so calibrated as to control the cooling air flow rate.

10. A turbomachine such as a turbojet or a turboprop, **characterized in that** it comprises a turbine rotor according to one of claims 1 to 9.
